# EUROPEAN PATENT SPECIFICATION

(11) **EP 4 194 588 B1**
(45) Date of publication and mention of the grant of the patent: **26.06.2024**
(21) Application number: 21213033.0
(22) Date of filing: 08.12.2021
(51) Int. Cl.: C25B 1/04, C25B 1/26, C25B 9/01, C25B 9/05, C25B 9/19, C25B 9/60, C25B 9/77

(54) **METHOD FOR SEALING AN ELECTROLYSIS CELL AND SEALED ELECTROLYSIS CELL**
VERFAHREN ZUM ABDICHTEN EINER ELEKTROLYSEZELLE UND ABGEDICHTETE ELEKTROLYSEZELLE
PROCÉDÉ D'ÉTANCHÉIFICATION D'UNE CELLULE D'ÉLECTROLYSE ET CELLULE D'ÉLECTROLYSE ÉTANCHE

(43) Date of publication of application: 14.06.2023
(73) Proprietor: thyssenkrupp nucera AG & Co. KGaA, 44141 Dortmund (DE)
(72) Inventor: Toros, Peter, 45326 Essen (DE); Austenfeld, Sebastian, 59494 Soest (DE)
(74) Representative: thyssenkrupp Intellectual Property GmbH

(56) References cited:
- EP-A1- 0 183 096
- JP-A- 2006 004 754
- US-A1- 2005 100 776
- US-A1- 2006 073 385

## Description

### Background of the invention

The invention relates to a method for sealing an electrolysis cell according to the preamble of claim 1 and a sealed electrolysis cell according to the preamble of claim 7.

Bipolar electrolyzers for large-scale production of hydrogen and/or chlorine (i.e. in the megawatt range) can be classified in two major design categories, namely filter press design and single element design.

In a conventional filter press electrolyzer, a stack of electrolysis cells is formed in a cell rack by stacking a plurality of cell elements under interposition of sheet-like separators and gaskets between adjacent cell elements and compressing the complete stack in order to seal all electrolysis cells at once. In electrolyzers of filter press design, each cell element forms the anode half-cell of one electrolysis cell and the cathode half-cell of a neighboring electrolysis cell in the stack. The sealing force for all cells is provided by tie-rods extending along the stack.

In an electrolyzer of single element design, each electrolysis cell is a separately sealed unit. Each electrolysis cell comprises two cell elements in the form of half-shells, which are bolted together in their rim regions, with a separator and gaskets interposed in-between. Thus, each cell element forms one half-cell of the electrolysis cell, the half-cells being separated by the separator. The sealing force for sealing the electrolysis cell is provided by the plurality bolts distributed circumferentially along the rim regions of the cell elements.

In both design options, the separator may be an ion exchange membrane, or a porous diaphragm, depending of the intended purpose of the electrolyzer. Further, in both design options a short-circuit between the two cell elements forming each electrolysis cell is to be reliably prevented, for which reason in addition to the gaskets usually at least one layer of electrically isolating material is interposed in the rim regions before sealing.

US 2011/0259735 A1 shows examples of the filter press design and the single element design of bipolar electrolyzers.

The known types of bipolar electrolyzers have the disadvantage that sealing of the cells causes a high assembly effort. Although in filter press electrolyzers the sealing force for all cells is provided by the same set of tie-rods, sealing of the cell stack is complicated and time-consuming since all separators, gaskets and isolation layers have to be correctly positioned at once. Single element electrolyzers require a high number of bolted connections for each element in order to prevent safely leakage during operation. Further, the space requirements for the structural elements needed to provide the sealing forces reduces the space available for cell volume, and in particular in the single element design the conventional sealing arrangement sets a lower limit for the thickness of each element.

US 2005/0100776 A1 discloses a unitized membrane electrode assembly ("MEA") with an improved edge sealing for a solid polymer electrolyte cell. The membrane electrode assembly includes the polymer electrolyte membrane, anode and cathode, and gas diffusion backing layers for each electrode. Flow field plates made of conductive material that provide flow fields for the reactants are placed between adjacent MEAs. A number of MEAs and flow field plates are assembled to provide a fuel cell stack.

EP 0 183 096 A1 describes a membrane unit comprising an ion exchange membrane and at least one layer of a second material adapted to reinforce the membrane, said reinforcing layer being secured to at least one side of the membrane around a gasket-bearing peripheral surface of the membrane. The reinforcing material can be bonded to the membrane e.g. by adhesive, heat sealing or ultrasonic sealing. A gasket is interposed between the membrane unit and an electrode frame on both side to form an electrolytic cell of the filter press type.

JP 2006 004754 A relates to a fuel cell with a plate-shaped solid polyelectrolyte having an anode side metal plate and a cathode side metal plate in which gas flow passage grooves are formed. The peripheral edges of the metal plates are sealed by caulking in an electrically insulated state.

US 2006/0073385 A1 relates to a method for sealing an electrolysis cell according to the preamble of claim 1 and a sealed electrolysis cell according to the preamble of claim 7. A heat-activated adhesive sealant material is used in a sealing process for uniting different components of an electrochemical cell. The adhesive sealant material encapsulates the edge portion of the membrane and interconnects the anode and cathode electrodes and plates of a single PEM cell.

### Brief Summary of Invention

The object of the invention is to provide a method for sealing an electrolysis cell and a sealed electrolysis cell with a lower assembly effort and reduced space requirements of the sealing arrangement.

This object is achieved by the method for sealing an electrolysis cell according to the features of claim 1 and a sealed electrolysis cell with the features of claim 7.

Hereby, a method for sealing an electrolysis cell comprising an anode half-cell and a cathode half-cell formed by at least two cell elements and a sheet-like separator separating the half-cells from one another is provided, the method comprising the following steps:
- providing the two cell elements and the sheet-like separator,
- interposing the separator between the two cell elements and interposing a layer of sealing material between each side of the separator and the two cell elements in a respective rim region of the cell elements,
- sealing the electrolysis cell, wherein a force is applied to the cell elements to compress the rim regions.
According to the invention, the sealing material is an electrically isolating material, and during the step of sealing the state of the sealing material is changed from a liquid state to a solid state to create an adhesive bond between the cell elements and the interposed separator by means of the sealing material. The force is relieved after the sealing material has solidified.

By using an adhesive bond of the cell elements to seal the electrolysis cell, assembly of the cell is simplified, since placing and fastening bolts is no longer necessary. Moreover, due to the electrically isolating properties of the adhesive, a separate isolation layer can be dispensed with. The method according to the invention is particularly well suited for an automatized manufacturing of electrolysis cells. In addition, it enables electrolyzers of the filter press type to be assembled on a cell-by-cell basis, since the sealing forces according to the invention are provided by the adhesive bond between the sealing material and the cell elements. Thus, no external forces to compress the stack are needed to seal the cells any more. Moreover, since external structural elements are no longer needed to maintain the sealing forces, the space requirements of the inventive sealing arrangement are particularly low, allowing for further reduction of the cell thickness.

In some embodiments, the sealing material is a chemically curing adhesive or a solvent-based adhesive. Chemically curing and solvent-based adhesives have the advantage of a particularly strong adhesive bonding, which is able to withstand high temperatures and/or harsh chemicals. When using adhesives as sealing material, the layers of sealing material are preferably interposed by applying the adhesive in a viscous liquid state to the rim regions of both cell elements.

In other embodiments, the sealing material is a thermoplastic material, wherein the step of sealing the electrolysis cell comprises:
- inputting energy to the sealing material to bring the sealing material into a thermoplastic state,
- bonding the cell elements and the interposed separator while the sealing material is in the thermoplastic state, and
- lowering the temperature of the sealing material to let the sealing material solidify.

Thermoplastic materials have the advantage that they allow for the possibility to open and reseal the electrolysis cell in an easy and non-destructive way. For maintenance purposes, as e.g. replacement of the separators, the rim regions can be heated up until the thermoplastic material is in the thermoplastic state again and the cell elements can be separated.

When thermoplastic materials are used as sealing material, the adhesive bond may be created in a two-step process, wherein the layers of sealing material are first bonded to the cell elements and wherein the two layers of sealing material are then bonded to each other and to the separator in the step of sealing. The first bond may for example already be present, when the two cell elements are provided, i.e. the cell elements are provided with a coating of thermoplastic material in their rim regions. Alternatively, the first bond may be created during the step of interposing the sealing material, or during the step of sealing.

The thermoplastic material can be brought into the thermoplastic state by different types of energy supply. In the simplest case, the energy is input by heating of the rim regions. Another possible way to input the energy is thermowelding of the layers of sealing material by means of ultrasound.

Particularly preferred for sealing the electrolysis cells are thermoplastic materials that contain polypropylene (PP), in particular atactic polypropylene (PP-R), and/or polyvinylchloride (PVC).

Preferably, the step of sealing further comprises folding the rim regions of the cell elements backwards to one side. The backward fold of both rim regions to the same side, e.g. by 120° to 180°, achieves a mechanical entanglement of the cell elements that further supports the sealing of the cell. In particular, the fold is advantageous in electrolysis cells to be operated at an elevated internal pressure, since the fold relieves the adhesive bond from the pressure force by a form lock.

According to the invention, the cell elements are made of a metal sheet having a thickness of less than or equal to 0.8 mm. Preferred metals are nickel and/or titanium. Due to the sealing concept according to the invention, it is even imaginable to produce electrolysis cells from metal foils having a thickness of less than or equal to 0.2 mm.

The problem is further solved by a sealed electrolysis cell comprising an anode half-cell and a cathode half-cell formed by at least two cell elements and a sheet-like separator separating the half-cells from one another. The cell elements each have a rim region and are attached to each other in the rim regions under interposition of a layer of sealing material between each side of the separator and the two cell elements in an electrically isolated and sealed manner. According to the invention the sealing material is a solidified liquid material forming an adhesive bond between the cell elements and providing electric isolation and sealing of the cell elements.

A major advantage of the sealed electrolysis cell of the invention is that the sealing forces are provided by an adhesive bond and external structural elements to maintain the sealing forces can be dispensed with. Thus, electrolyzers using this type of electrolysis cell better make use of the available space and the cells can be operated under less mechanical stress. Further, the sealing arrangement is no longer limiting the possibility to design electrolysis cell of reduced thickness.

In certain embodiments, the sealing material is a chemically cured adhesive or a dried solvent-based adhesive.

In other embodiments, the sealing material is a thermoplastic material. In particular, it is preferred that the sealing material contains polypropylene (PP) and/or polyvinylchloride (PVC).

In preferred embodiments, the edges of the sheet-like separator are immersed within the solidified sealing material. Thus, also risks of leakage due to capillary effects of the separator can be avoided. This is in particular advantageous if porous diaphragms are used as separator, since porous diaphragms are known to cause leakages issues by capillary forces, if they extend between the rim regions of the cell elements to the outside of the cell.

Further, it is preferred that the rim regions of the cell elements are fold backwards to one side, so as to provide a mechanical form lock between the cell elements.

The cell elements are made of a metal sheet having a thickness of less than or equal to 0.8 mm, in particular preferably less than or equal to 0.2mm. Preferred metals are nickel and/or titanium.

In particular, the invention relates to electrolysis cells of industrial scale. The separator of the electrolysis cell according to the invention therefore preferably has an area of 0.5 m² to 4 m². Further, the electrolysis cell is preferably configured for current densities of at least 3 kA/m².

Further advantages of the invention are described in the following with regard to the embodiments shown in the attached drawings.

### Brief Description of Drawings

- Fig. 1: shows schematically a flow diagram illustrating the inventive method for sealing an electrolysis cell,
- Fig. 2A to 2C: show schematically different stages of the production of sealed electroly-sis cells of the single element type according to the invention,
- Fig. 3A and 3B: show schematically different stages of the production of a sealed electrolysis cell of the filter press type according to the invention.

### Detailed Description of Invention

In the drawings same parts are consistently identified by the same reference signs and are therefore generally described and referred to only once.

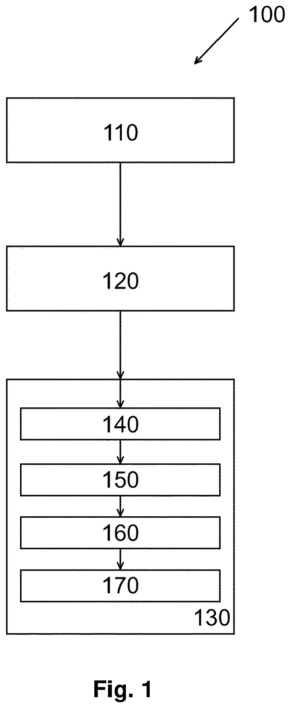

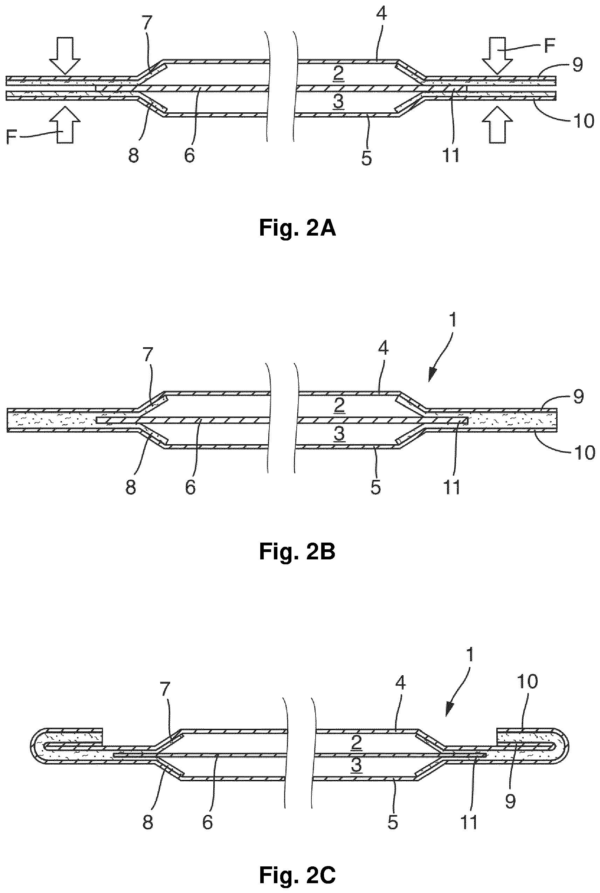

In Fig. 1, a flow diagram of the method 100 for sealing an electrolysis cell is shown, illustrating the sequence of the steps in an abstract manner. Fig. 2A shows an electrolysis cell in a state before the sealing step of the method and Fig. 2B shows an embodiment of the sealed electrolysis cell 1. Fig. 2C shows a different embodiment of the sealed electrolysis cell 1 with backwards folded rim regions. The method steps will be described in the following with reference to Figs. 1 and 2A to 2C.

According to the inventive method in step 110 two cell elements 4, 5 and a sheet-like separator 6 are provided. In step 120 the separator 6 is interposed between the two cell elements 4, 5 and a layer of sealing material 7, 8 is interposed between each side of the separator 6 and the two cell elements 4, 5 in a respective rim region 9, 10 of the cell elements 4, 5. Fig. 2A shows the electrolysis cell in an assembly stage after step 120.

In step 130 the electrolysis cell 1 is sealed, wherein a force F is applied to the cell elements 4, 5 to compress the rim regions 9, 10. The sealing material 7, 8 is an electrically isolating material and during the sealing step 130 the state of the sealing material 7, 8 is changed from a liquid state to a solid state to create an adhesive bond of the cell elements 4, 5 and the interposed separator 6 by means of the sealing material 7, 8. The force F is relieved after the sealing material 7, 8 has solidified. Fig. 2B shows the sealed electrolysis cell 1 after step 130.

The sealing material 7, 8 may be a chemically curing adhesive or a solvent-based adhesive.

In the method shown in Fig. 1, the sealing material 7, 8 is a thermoplastic material. The step of sealing 130 of the electrolysis cell 1 therefore further comprises a step of inputting energy 140 to the rim regions 9, 10 to bring the sealing material 7, 8 into a thermoplastic state, a step of bonding 150 the cell elements 4, 5 and the interposed separator 6 while the sealing material 7, 8 is in the thermoplastic state, and a step of lowering the temperature 160 of the sealing material 7, 8 to let the sealing material 7, 8 solidify. Preferably, the sealing material 7, 8 contains polypropylene (PP) and/or polyvinylchloride (PVC).

For example, the energy may be input by heating of the rim regions 9, 10 to a temperature at which the sealing material is in its thermoplastic state. Lowering the temperature of the sealing material 7, 8 may e.g. be achieved by letting the temperature settle to the ambient temperature, or by an active cooling of the rim regions 9, 10.

Preferably, as shown in Fig. 1 the step of sealing 130 further comprises folding 170 of the rim regions 9, 10 of the cell elements 4, 5 backwards to one side of the separator. The folding 170 may be carried out either after the sealing material has solidified, or before. In particular, if a chemically curing adhesive or a solvent-based adhesive is used, folding 170 is preferred to be carried out before the adhesive has solidified. Fig. 2C shows an embodiment of the sealed cell 1 after the step of folding 170.

A sealed electrolysis cell 1 manufactured according to the inventive method is shown in Fig. 2B. The sealed electrolysis cell 1 comprises an anode half-cell 2 and a cathode half-cell 3 formed by at least two cell elements 4, 5 and a sheet-like separator 6 separating the half-cells 2, 3 from one another.

The anode half-cell 2 and the cathode half-cell 3 contain an anode and a cathode, respectively (not shown). The anode and the cathode may be joined to the respective cell element 4, 5 in one piece, or may be configured as separate components.

The cell elements 4, 5 each have a rim region 9, 10 and are attached to each other in the rim regions 9, 10 under interposition of a layer of sealing material 7, 8 between each side of the separator 6 and the two cell elements 4, 5 in an electrically isolated and sealed manner. The sealing material 7, 8 of the sealed cell 1 is a solidified liquid material forming an adhesive bond between the cell elements 4, 5 and providing electric isolation and sealing of the cell elements 4, 5.

The solidified sealing material is a chemically cured adhesive or a dried solvent-based adhesive. Alternatively, the sealing material can be a thermoplastic material. In particular, the sealing material may contain polypropylene (PP) and/or polyvinylchloride (PVC).

As shown in Fig. 2B, the edges 11 of the sheet-like separator 6 are preferably immersed within in the solidified sealing material. Thus, the sheet-like separator 6 does not extend through the rim regions 9, 10 to the outside of the cell, but is confined in a form-fitting manner within the adhesive bond between the cell elements 4, 5.

The cell elements 4, 5 are made of a metal sheet having a thickness of less than or equal to 0.8 mm. In particular it is imaginable that the cell elements are made of a metal foil having a thickness of less than or equal to 0.1 mm. Preferred metals are nickel and titanium.

The electrolysis cell 1 is preferably configured for alkaline water electrolysis or chlor-alkali electrolysis.

Fig. 2C shows an embodiment of the sealed electrolysis cell 11, in which the rim regions 9, 10 of the cell elements 4, 5 are fold backwards to one side. In all other respects, the description of the embodiment shown in Fig. 2A is applicable to the embodiment shown in Fig. 2B, accordingly.

The embodiments of Fig. 2B and 2C relate to electrolysis cells 1 of the single element design. The electrolysis cells 1 are configured as separate units, which can be connected electrically in series by abutting the backsides of the cell elements 4, 5 to an adjacent cell. Thereby, a stack of electrolysis cell 1 can be built and provided with power supply on the outer sides of the outmost cells of the stack.

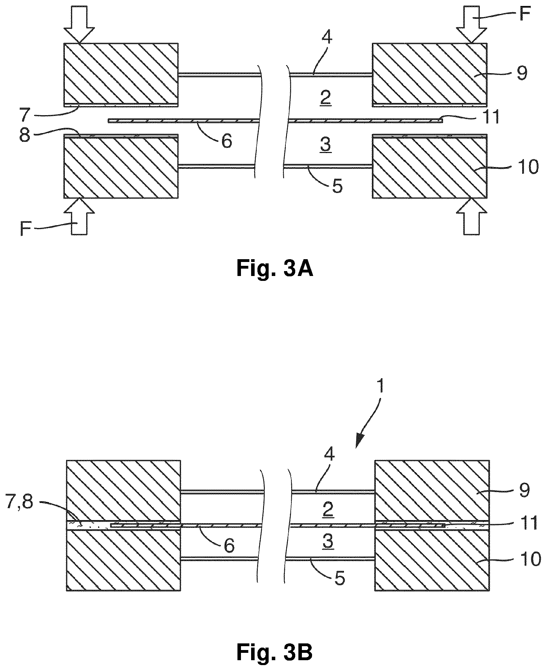

Figs. 3A and 3B show an embodiment of the method and the sealed cell 1 of the filter press type. Each cell element 4, 5 provides an anode half-cell 2 and a cathode half-cell 3 of an adjacent cell. A plurality of cell elements 4, 5 can be sealed one-by-one to each other under interposition of one separator 6 each to for a stack of electrolysis cells 1 of the filter press type.

In all other respects, the description of the embodiments shown in Figs. 2A and 2B is applicable to the embodiments shown in Fig. 3A and 3B, accordingly.

### List of Reference Signs

- 1: electrolysis cell
- 2: anode half-cell
- 3: cathode half-cell
- 4, 5: cell elements
- 6: separator
- 7, 8: sealing material
- 9, 10: rim region
- 11: edge of separator

- 100: method for sealing an electrolysis cell
- 110: providing cell elements and separator
- 120: interposing separator and sealing material between cell elements
- 130: sealing the electrolysis cell
- 140: inputting energy to the rim regions
- 150: bonding cell elements and separator
- 160: lowering the temperature of rim regions
- 170: folding the rim regions

- F: compressive force

## Claims

1. Method for sealing an electrolysis cell (1) comprising an anode half-cell (2) and a cathode half-cell (3) formed by at least two cell elements (4, 5) and a sheet-like separator (6) separating the half-cells (2, 3) from one another, the method (100) comprising the following steps:
• providing (110) the two cell elements (4, 5) and the sheet-like separator (6),
• interposing (120) the separator (6) between the two cell elements (4, 5) and interposing a layer of sealing material (7, 8) between each side of the separator (6) and the two cell elements (4, 5) in a respective rim region (9, 10) of the cell elements (4, 5),
• sealing (130) the electrolysis cell (1), wherein a force (F) is applied to the cell elements (4, 5) to compress the rim regions (9, 10),
wherein the sealing material (7, 8) is an electrically isolating material, wherein during the step of sealing (130) the state of the sealing material (7, 8) is changed from a liquid state to a solid state to create an adhesive bond between the cell elements (4, 5) and the interposed separator (6) by means of the sealing material (7, 8), wherein the force (F) is relieved when the sealing material (7, 8) has solidified, **characterized in that** the cell elements (4, 5) are made of a metal sheet having a thickness of less than or equal to 0.8 mm, in particular less than or equal to 0.2 mm.

2. Method according to claim 1, **characterized in that** the sealing material (7, 8) is a chemically curing adhesive or a solvent-based adhesive.

3. Method according to claim 1, **characterized in that** the sealing material (7, 8) is a thermoplastic material, wherein the step of sealing (130) the electrolysis cell (1) comprises:
• inputting energy (140) to the sealing material (7, 8) to bring the sealing material (7, 8) into a thermoplastic state,
• bonding (150) the cell elements (4, 5) and the interposed separator (6) while the sealing material (7, 8) is in the thermoplastic state, and
• lowering the temperature (160) of the sealing material (7, 8) to let the sealing material (7, 8) solidify.

4. Method according to claim 3, **characterized in that** the energy is input by heating or ultrasound.

5. Method according to claim 3 or 4, **characterized in that** the sealing material (7, 8) contains polypropylene (PP) and/or polyvinylchloride (PVC).

6. Method according to one of the claims 1 to 5, **characterized in that** the step of sealing (130) further comprises
• folding (170) the rim regions (9, 10) of the cell elements (4, 5) backwards to one side.

7. Sealed electrolysis cell (1) comprising an anode half-cell (2) and a cathode half-cell (3) formed by at least two cell elements (4, 5) and a sheet-like separator (6) separating the half-cells (2, 3) from one another, wherein the cell elements (4, 5) each have a rim region (9, 10) and are attached to each other in the rim regions (9, 10) under interposition of a layer of sealing material (7, 8) between each side of the separator (6) and the two cell elements (4, 5) in an electrically isolated and sealed manner, wherein the sealing material (7, 8) is a solidified liquid material forming an adhesive bond between the cell elements (4, 5) and providing electric isolation and sealing of the cell elements (4, 5) **characterized in that** the cell elements (4, 5) are made of a metal sheet having a thickness of less than or equal to 0.8 mm, in particular less than or equal to 0.2 mm.

8. Sealed electrolysis cell according to claim 7, **characterized in that** the sealing material (7, 8) is a chemically cured adhesive or a dried solvent-based adhesive.

9. Sealed electrolysis cell according to claim 7, **characterized in that** the sealing material (7, 8) is a thermoplastic material.

10. Sealed electrolysis cell according to claim 9, **characterized in that** the sealing material (7, 8) contains polypropylene (PP) and/or polyvinylchloride (PVC).

11. Sealed electrolysis cell according to one of the claims 7 to 10, **characterized in that** the rim regions (9, 10) of the cell elements (4, 5) are fold backwards to one side.

## Patentansprüche

1. Verfahren zum Abdichten einer Elektrolysezelle (1), die eine Anoden-Halbzelle (2) und eine Kathoden-Halbzelle (3) umfasst, die durch mindestens zwei Zellelemente (4, 5) und einen flächigen Separator (6) gebildet werden, der die Halbzellen (2, 3) voneinander trennt, wobei das Verfahren (100) die folgenden Schritte umfasst:
- Bereitstellen (110) der beiden Zellelemente (4, 5) und des flächigen Separators (6),
- Einfügen (120) des Separators (6) zwischen die beiden Zellelemente (4, 5) und Einfügen einer Schicht aus Dichtungsmaterial (7, 8) zwischen jede Seite des Separators (6) und die beiden Zellelemente (4, 5) in einem jeweiligen Randbereich (9, 10) der Zellelemente (4, 5),
- Abdichten (130) der Elektrolysezelle (1), wobei eine Kraft (F) auf die Zellelemente (4, 5) ausgeübt wird, um die Randbereiche (9, 10) zusammenzudrücken,
wobei das Dichtungsmaterial (7, 8) ein elektrisch isolierendes Material ist, wobei während des Schritts des Abdichtens (130) der Zustand des Dichtungsmaterials (7, 8) von einem flüssigen Zustand in einen festen Zustand geändert wird, um eine Klebeverbindung zwischen den Zellelementen (4, 5) und dem eingefügten Separator (6) mittels des Dichtungsmaterials (7, 8) zu erzeugen, wobei die Kraft (F) zurückgenommen wird, wenn das Dichtungsmaterial (7, 8) sich verfestigt hat, **dadurch gekennzeichnet, dass** die Zellelemente (4, 5) aus einem Metallblech mit einer Dicke von kleiner oder gleich 0,8 mm, insbesondere kleiner oder gleich 0,2 mm hergestellt sind.

2. Verfahren nach Anspruch 1, **dadurch gekennzeichnet, dass** das Dichtungsmaterial (7, 8) ein chemisch härtender Klebstoff oder ein Klebstoff auf Lösungsmittelbasis ist.

3. Verfahren nach Anspruch 1, **dadurch gekennzeichnet, dass** das Dichtungsmaterial (7, 8) ein thermoplastisches Material ist, wobei der Schritt des Abdichtens (130) der Elektrolysezelle (1) umfasst:
- Einbringen von Energie (140) in das Dichtungsmaterial (7, 8), um das Dichtungsmaterial (7, 8) in einen thermoplastischen Zustand zu bringen,
- Verbinden (150) der Zellelemente (4, 5) und des dazwischenliegenden Separators (6), während sich das Dichtungsmaterial (7, 8) in dem thermoplastischen Zustand befindet, und
- Absenken der Temperatur (160) des Dichtungsmaterials (7, 8), um das Dichtungsmaterial (7, 8) erstarren zu lassen.

4. Verfahren nach Anspruch 3, **dadurch gekennzeichnet, dass** die Energie durch Beheizung oder Ultraschall zugeführt wird.

5. Verfahren nach Anspruch 3 oder 4, **dadurch gekennzeichnet, dass** das Dichtungsmaterial (7, 8) Polypropylen (PP) und/oder Polyvinylchlorid (PVC) enthält.

6. Verfahren nach einem der Ansprüche 1 bis 5, **dadurch gekennzeichnet, dass** der Schritt des Versiegelns (130) ferner umfasst
- Zurückfalten (170) der Randbereiche (9, 10) der Zellenelemente (4, 5) zu einer Seite hin.

7. Versiegelte Elektrolysezelle (1) mit einer Anoden-Halbzelle (2) und einer Kathoden-Halbzelle (3), die durch mindestens zwei Zellelemente (4, 5) gebildet werden, und einem flächigen Separator (6), der die Halbzellen (2, 3) voneinander trennt, wobei die Zellelemente (4, 5) jeweils einen Randbereich (9, 10) aufweisen und in den Randbereichen (9, 10) unter Zwischenschaltung einer Schicht aus Versiegelungsmaterial (7) aneinander befestigt sind, (4, 5) jeweils einen Randbereich (9, 10) aufweisen und in den Randbereichen (9, 10) unter Einfügung einer Schicht aus Dichtungsmaterial (7, 8) zwischen jeder Seite des Separators (6) und den beiden Zellelementen (4, 5) in elektrisch isolierter und abgedichteter Weise aneinander befestigt sind, wobei das Dichtungsmaterial (7, 8) ein verfestigtes flüssiges Material ist, das eine Klebeverbindung zwischen den Zellelementen (4, 5) bildet und für eine elektrische Isolierung und Abdichtung der Zellelemente (4, 5) sorgt, **dadurch gekennzeichnet, dass** die Zellelemente (4, 5) aus einem Metallblech mit einer Dicke von kleiner oder gleich 0,8 mm, insbesondere kleiner oder gleich 0,2 mm hergestellt sind.

8. Versiegelte Elektrolysezelle nach Anspruch 7, **dadurch gekennzeichnet, dass** das Dichtungsmaterial (7, 8) ein chemisch gehärteter Klebstoff oder ein getrockneter Klebstoff auf Lösungsmittelbasis ist.

9. Versiegelte Elektrolysezelle nach Anspruch 7, **dadurch gekennzeichnet, dass** das Dichtungsmaterial (7, 8) ein thermoplastisches Material ist.

10. Versiegelte Elektrolysezelle nach Anspruch 9, **dadurch gekennzeichnet, dass** das Dichtungsmaterial (7, 8) Polypropylen (PP) und/oder Polyvinylchlorid (PVC) enthält.

11. Versiegelte Elektrolysezelle nach einem der Ansprüche 7 bis 10, **dadurch gekennzeichnet, dass** die Randbereiche (9, 10) der Zellelemente (4, 5) zu einer Seite hin zurückgefaltet sind.

## Revendications

1. Procédé d'étanchéité d'une cellule d'électrolyse (1) comprenant une demi-cellule anodique (2) et une demi-cellule cathodique (3) formée par au moins deux éléments cellulaires (4, 5) et un séparateur en forme de feuille (6) séparant les demi-cellules (2, 3) l'une de l'autre, le procédé (100) comprenant les étapes suivantes :
- fournir (110) les deux éléments cellulaires (4, 5) et le séparateur en forme de feuille (6),
- interposer (120) le séparateur (6) entre les deux éléments cellulaires (4, 5) et interposer une couche de matériau d'étanchéité (7, 8) entre chaque côté du séparateur (6) et les deux éléments cellulaires (4, 5) dans une région de bord respectif (9, 10) des éléments cellulaires (4, 5),
- étancher (130) la cellule d'électrolyse (1), une force (F) étant appliquée aux éléments cellulaires (4, 5) pour comprimer les zones de bord (9, 10),
dans lequel le matériau d'étanchéité (7, 8) est un matériau d'isolation électrique, dans lequel, au cours de l'étape de étanchement (130), l'état du matériau d'étanchéité (7, 8) passe d'un état liquide à un état solide pour créer une liaison adhésive entre les éléments de la cellule (4, 5) et le séparateur interposé (6) au moyen du matériau d'étanchéité (7, 8), la force (F) étant supprimée lorsque le matériau d'étanchéité (7, 8) s'est solidifié, **caractérisé en ce que** les éléments cellulaires (4, 5) sont constitués d'une feuille de métal dont l'épaisseur est inférieure ou égale à 0,8 mm, en particulier inférieure ou égale à 0,2 mm.

2. Procédé selon la revendication 1, **caractérisé en ce que** le matériau d'étanchéité (7, 8) est un adhésif à durcissement chimique ou un adhésif à base de solvant.

3. Procédé selon la revendication 1, **caractérisé en ce que** le matériau d'étanchéité (7, 8) est un matériau thermoplastique, dans lequel l'étape de étanchement (130) de la cellule d'électrolyse (1) comprend :
- l'apport d'énergie (140) au matériau d'étanchéité (7, 8) pour amener le matériau d'étanchéité (7, 8) dans un état thermoplastique,
- coller (150) les éléments cellulaires (4, 5) et le séparateur intercalé (6) pendant que le matériau d'étanchéité (7, 8) est à l'état thermoplastique, et
- abaisser la température (160) du matériau d'étanchéité (7, 8) pour permettre au matériau d'étanchéité (7, 8) de se solidifier.

4. Méthode selon la revendication 3, **caractérisée en ce que** l'énergie est apportée par chauffage ou par ultrasons.

5. Procédé selon la revendication 3 ou 4, **caractérisé en ce que** le matériau d'étanchéité (7, 8) contient du polypropylène (PP) et/ou du polychlorure de vinyle (PVC).

6. Procédé selon l'une des revendications 1 à 5, **caractérisé en ce que** l'étape de étanchement (130) comprend en outre
- plier (170) les zones de bord (9, 10) des éléments cellulaires (4, 5) vers l'arrière d'un côté.

7. Cellule d'électrolyse étanche (1) comprenant une demi-cellule anodique (2) et une demi-cellule cathodique (3) formées par au moins deux éléments cellulaires (4, 5) et un séparateur en forme de feuille (6) séparant les demi-cellules (2, 3) l'une de l'autre, dans laquelle les éléments cellulaires (4, 5) ont chacun une région de bord (9, 10) et sont fixés l'un à l'autre dans les régions de bord (9, 10) sous l'interposition d'une couche de matériau d'étanchéité (7, 8) entre chaque côté du séparateur (6) et les deux éléments cellulaires (4, 5) d'une manière électriquement isolée et étanchée, dans laquelle le matériau d'étanchéité (7, 8) est un matériau liquide solidifié formant une liaison adhésive entre les éléments cellulaires (4, 5) et assurant l'isolation électrique et l'étanchement des éléments cellulaires (4, 5) **caractérisé en ce que** les éléments cellulaires (4, 5) sont constitués d'une feuille de métal d'une épaisseur inférieure ou égale à 0,8 mm, en particulier inférieure ou égale à 0,2 mm.

8. Cellule d'électrolyse étanche selon la revendication 7, **caractérisée en ce que** le matériau d'étanchéité (7, 8) est un adhésif durci chimiquement ou un adhésif sec à base de solvant.

9. Cellule d'électrolyse étanche selon la revendication 7, **caractérisée en ce que** le matériau d'étanchéité (7, 8) est un matériau thermoplastique.

10. Cellule d'électrolyse étanche selon la revendication 9, **caractérisée en ce que** le matériau d'étanchéité (7, 8) contient du polypropylène (PP) et/ou du polychlorure de vinyle (PVC).

11. Cellule d'électrolyse étanche selon l'une des revendications 7 à 10, **caractérisée en ce que** les zones de bord (9, 10) des éléments cellulaires (4, 5) sont repliées vers l'arrière sur un côté.
